# EUROPEAN PATENT SPECIFICATION

(11) **EP 4 132 999 B1**
(45) Date of publication and mention of the grant of the patent: **25.12.2024**
(21) Application number: 21717078.6
(22) Date of filing: 07.04.2021
(51) Int. Cl.: C08J 5/22, H01M 8/1023, H01M 8/1039, H01M 8/1072, H01M 8/1088

(54) **METHOD OF MANUFACTURING AN ANION EXCHANGE MEMBRANE**
VERFAHREN ZUR HERSTELLUNG EINER ANIONENAUSTAUSCHMEMBRAN
PROCÉDÉ DE FABRICATION D'UNE MEMBRANE ÉCHANGEUSE D'ANIONS

(30) Priority: 07.04.2020 GB 202005155
(43) Date of publication of application: 15.02.2023
(73) Proprietor: Enapter S.r.l., 56040 Crespina Lorenzana (IT)
(72) Inventor: FILPI, Antonio, 56040 Pisa (IT); AGONIGI, Gabriele, 56040 Pisa (IT); TRIVARELLI, Federica, 56040 Pisa (IT); CATANORCHI, Stefano, 56040 Pisa (IT); SCHMIDT, Jan-Justus, 56040 Pisa (IT)
(74) Representative: Drywood, Rosalind Aerona
(86) International application number: PCT/EP2021/059087
(87) International publication number: WO 2021/204890

(56) References cited:
- EP-A1- 3 106 476
- US-A1- 2009 148 744
- US-A1- 2019 044 158
- DATABASE WPI Week 201941, 2019 Derwent World Patents Index; AN 2019-212825, XP002803304
- WANG ZHIHUA ET AL: "Crosslinked poly (2,6-dimethyl-1,4-phenylene oxide) polyelectrolyte enhanced with poly (styrene-b-(ethylene-co-butylene)-b-styrene) for anion exchange membrane applications", JOURNAL OF MEMBRANE SCIENCE, ELSEVIER BV, NL, vol. 564, 17 July 2018 (2018-07-17), pages 492 - 500, XP085452041, ISSN: 0376-7388, DOI: 10.1016/J.MEMSCI.2018.07.039
- JINKAI HAO ET AL: "Crosslinked high-performance anion exchange membranes based on poly(styrene-b-(ethylene-co-butylene)-b-styrene)", JOURNAL OF MEMBRANE SCIENCE, vol. 551, 24 January 2018 (2018-01-24), NL, pages 66 - 75, XP055647135, ISSN: 0376-7388, DOI: 10.1016/j.memsci.2018.01.033
- PARK ET AL: "Performance of solid alkaline fuel cells employing anion-exchange membranes", JOURNAL OF POWER SOURCES, ELSEVIER SA, CH, vol. 178, no. 2, 3 March 2008 (2008-03-03), pages 620 - 626, XP022509801, ISSN: 0378-7753, DOI: 10.1016/J.JPOWSOUR.2007.08.043
- DATABASE WPI Week 201934, 2019 Derwent World Patents Index; AN 2019-12064W, XP002803305

## Description

The present invention relates to a method for manufacturing an AEM. The AEM is intended for, but not necessarily limited to, use in an electrochemical device such as an electrolyser.

Electrolysis of water is well known, having been done since the 1800s. Liquid alkaline and PEM electrolysers are more established, with AEM electrolysers an emerging, more sustainable approach, which is also in an inherently less corrosive environment. However, given the infancy of AEM electrolysis, there are few membranes which satisfy the required properties.

Electrochemical devices may include but are not limited to electrolysers, fuel cells and electrochemical compressors. AEMs may be used with any of those devices. Alternatively, electrochemical devices may use the relatively more established proton exchange membranes (PEM), PEM systems utilising a different reaction pathway.

Ion exchange membranes, either AEM or PEM, are semi-permeable allowing only certain ions to cross from one side to another. In electrochemical devices this tends to be from a cathodic side of the membrane to the anodic side, or vice versa. AEMs allow the transfer of OH⁻ whereas PEMs allowing transport of H⁺ ions. Accordingly, PEMs comprise anions, and AEMs cations in their structure. A further difference is that PEM systems require an acidic environment, which is highly corrosive. A benefit of AEM electrolysers is the ability to use mildly alkaline environments, which are relatively far less corrosive.

The properties desired for an AEM to be used in a device such as an electrolyser are mechanical stability, low hydrogen crossover, low water uptake, and good conductivity.

AEM systems are inherently more sustainable than PEM or liquid alkaline electrolysers given that AEM systems are not dependent upon platinum group metals (PGM) as catalysts and are less corrosive, allowing usage of cheaper, and/or more sustainable materials for other components. Following state of the art is cited: Jinkai Hao et al., Journal of Membrane Science, vol. 551, 24 January 2018, pages 66-75; Park et al., Journal of Power Sources, Elsevier SA, CH, vol. 178, no2, 3 March 2008, pages 620-626; CN109 265 715.

The object of the present invention is to provide a method of manufacturing an improved AEM for use with, but not necessarily restricted to, electrochemical devices.

The present invention is defined in the appended claims. According to the invention there is provided a method of manufacturing an anion exchange membrane, the method comprising:
- purifying a thermoplastic elastomer (TPE) comprising an aromatic ring,
- halomethylating the purified TPE, and
- casting of the membrane,
- aminating the purified and halomethylated TPE with at least a first amine and a second amine, the amines being any two or more of:
   - a monoamine,
   - a diamine, and
   - a polyamine, and
- preparing the resultant membrane for use or storage,
wherein the amination step is carried out on the cast membrane, and crosslinking of the membrane occurs during the amination step.

As used herein, reference to SEBS does not exclude other styrene comprising TPEs. Another commonality between TPEs is the presence of at least one repeating second monomer such that it is a co-polymer, random or otherwise.

As used herein styrene or styrene-like is intended to mean any aromatic containing units. It is noted that the use of "styrene" is intended to include both styrene, or a styrene-like alternative. Preferably, the styrene or styrene-like component being suitable for a Friedel-Crafts like reaction.

As used herein halomethylating will be used to describe any process that could lead to an halomethylated TPE.

Beneficially, the TPE may be a polymeric backbone, and the method may include cross-linking of a polymeric backbone to one or more other polymeric backbones and/or a side chain of a said polymeric backbone. Such cross-linking may occur immediately after, said casting step. Beneficially, said cross-linking occurs during said amination step, which in the claimed invention is performed on the cast membrane.

The first and second amines are preferably TMHDA and TMA respectively. Indeed, the first and second amines may, in various exemplary embodiments, be any two amine groups selected from:
- N-methylimidazole,
- N-methylpiperidine,
- N-Methylpyrrolidine,
- Triethanolamine
- DABCO,
- TMEDA,
- TMHDA, and
- TMA.

In a preferred embodiment, halomethylation may involve:
- dissolving the purified TPE,
- mixing the dissolved TPE with any of trioxane, trimethylsilyl chloride and SnCl₄,
- placing the reactants in a reflux condenser and,
- heating from 0°C to 50°C for an extended period between 3 hours and 6 days.

Alternatively, halomethylation may include the use of chloroether and a Lewis acid, such as but not necessarily limited to SnCl₄. Chloroether such as Bis(chloromethyl)ether has been used, but given its carcinogenic properties is not necessarily desirable. Presently described is a means of producing said chloroether in situ by use of, but again not necessarily limited to, trioxane and trimethylsilyl chloride. Alternatives include paraformaldehyde or formaldehyde in place of the trimethylsilyl chloride. Chlorosulfonic acid may also be used as the chloride source.

The membrane may be cast with means adapted to control the rate of evaporation of the solvent.

Optionally, the membrane may be cast by heating and extruding then purified chloromethylated polymer or by roll to roll.

In various exemplary embodiments, one or more of the amines selected may have a carbon chain of three or more.

In an embodiment, a ratio of said first amine to said second amine may be predetermined. Preferably, a ratio of said first amine to said second amine may be predetermined to determine cross-linking.

In an exemplary method, any one of, or combination of, the following fillers may be present: Al₂O₃, SnO₂, Cu phthalocyanine, Vulcan, and aluminosilicates such as montmorillonite.

Optionally, a, or each of two or more steps, is undertaken in an environment controlled for any of the following:
- light,
- cleanliness,
- humidity, and
- inert atmosphere.

The methods as described above are used to manufacture an-ion exchange membrane.

Such an an-ion exchange membrane may comprise one or more cationic groups wherein the functionalisation degree is between 1% and 50%.

Such an anion exchange membrane may, optionally, comprise a thermoplastic elastomer (TPE) comprising an aromatic ring, said TPE being a polymeric backbone, wherein the styrene content of the TPE is between 30wt% and 70wt%, and wherein a first polymeric backbone is cross-linked to one or more polymeric backbones and/or side chain(s) of a polymeric backbone, the an-ion exchange membrane further comprising one or more cationic groups, wherein the functionalisation degree is between 1% and 50%.

The styrene content may be determined using standard techniques, such as nuclear magnetic resonance (NMR) and preferably ¹H-NMR. Though less preferred, FT-IR of the TPE may also be used. For the ¹H-NMR determination, ca. 20 mg of the polymer are dissolved into an appropriate deuterated solvent such as but not limited to CDCl₃ or DMSO-d₆. The polymer solution is then transferred to a NMR tube and the ¹H-NMR spectra is recorded. Integrated proton signals can then be related to the styrene content, or indeed other components to be measured.

The functionalisation degree may be determined using standard techniques, such as NMR and preferably ¹H-NMR. Though less preferred, FT-IR of the functionalised TPE may also be used. For the 1H-NMR determination, ca. 20 mg of the functionalised polymer are dissolved into an appropriate deuterated solvent such as but not limited to CDCl₃ or DMSO-d₆. The polymer solution is then transferred to a NMR tube and the ¹H-NMR spectra is recorded. Integrated proton signals can finally be related to the functionalisation degree.

In a preferred embodiment, the functionalisation degree may be in the range 3% to 35%.

Optionally, the one or more cationic groups may comprise nitrogen, phosphorous, sulphur and/or a metal ion.

In an exemplary anion exchange membrane, a first polymeric backbone may be cross-linked to a side chain including a cationic group.

Beneficially, the styrene, or aromatic ring, content of the TPE may be in the range 35wt% to 55wt%.

Beneficially, the membrane may have a thickness between 10 and 100µm.

An anion exchange membrane substantially as described above may be utilised in a membrane electrode assembly in any one of:
- electrolyser,
- fuel cell,
- electrochemical compressor, and
- electroosmotic device.

A membrane electrode assembly may include an an-ion exchange membrane substantially as described above.

Thus, whilst a variety of TPEs may be used comprising an aromatic ring, in the preferred embodiment styrene-ethylene-butylene-styrene (SEBS) is used. Alternatively, the aromatic ring may be styrene, or styrene-like. Styrene-like alternatives do not necessarily need to be derived from styrene, such as polyphenylene oxide (PPO) or any methyl containing aromatic ring in the polymer.

It is envisaged that the styrene content of the thermoplastic elastomer, such as SEBS, is in the range of 30wt% and 70wt%. More preferably still, the range of styrene content is between 35wt% and 55wt%. Yet more preferably still, the styrene is in the range of 40wt% and 50wt%. In the preferred embodiment, the styrene content is substantially 42wt%.

As used herein functionalisation degree denotes the ratio of monomers which are charged versus the total monomers. Alternatives for measurement include the ratio of monomers which are charged versus those monomers which may be converted to have a charge.

The morphology of the SEBS, or alternative thermoplastic elastomer comprising styrene, is dependent upon the styrene content. For example, hydrophilic microchannels in the membrane are observed either side of the preferred range above. Within the preferred range, the structure has been found to differ in that it is lamellar, alternating between styrenic and aliphatic blocks. In fact, any block copolymer comprising blocks A and B will exhibit similar characteristics, this is not intended to be limited only to SEBS.

If too thin, the mechanical strength of the AEM is likely to be too low and hydrogen crossover more prevalent when operating at pressure. If too thick whilst the mechanical strength will improve, other characteristics will likely suffer such as but limited to the conductivity, and water transport. Therefore, the membrane is envisaged to be between 10 micrometres and 100 micrometres, more preferably still between 30 micrometres and 80 micrometres.

Crosslinking of the polymeric backbone helps to improve the mechanical strength, and longevity, of the AEM. However, crosslinking may negatively impact other desired characteristics, such as conductivity. Crosslinking may be achieved in a plurality of ways. In one embodiment, crosslinking may be achieved by using a mixture of a diamine and a monoamine that can react with moieties present onto the polymer leading to positive charge groups such as TMHDA:TMA. This blend of solutions is then mixed with a solvent with the polymer film, that being the backbone of the AEM, and is placed in the solution and functionalised for a period of time. One of the most commonly used diamines is DABCO (1,4-diazabicyclo[2.2.2]octane), however this does not allow for control of the relative reaction rate, leading to poor crosslinking degree. Preferably, a diamine or polyamine with a carbon chain greater than or equal to 3, such as TMHDA (N,N,N',N'-Tetramethyl-1,6-hexanediamine), can be used in adjusted ratios with TMA(Trimethylamine), or other monoamine, to predetermine the degree of crosslinking.

The ratio given above is 20:80. In fact it is envisaged that the ratio of a first amine to second amine, such as TMHDA:TMA may be in the range of 5:95 and 60:40. Examples including but not limited to 10:90, 20:80, 30:70, 40:60 and 50:50. Depending on the final properties required, the trade-off should be considered. These ratios apply to the mixture due to the relative reactivity of the cited example amines. Other ratios may be used to achieve the desired degree of crosslinking if the relative reactivities are different. For example, if an amine is used that has a relative reactivity vs TMA of 1:10, in order to achieve the same cross linking as 10:90, a ratio of 1:99 should be used. The relative reactivity may be determined by known means and the above ratios amended accordingly.

It is envisaged that it is possible to use a combination of monoamine and diamine, or monoamine and triamine, or in fact monoamine and polyamine, or two polyamines having different reaction rate versus crosslinking may be used the amines may be linear or cyclic. The amount of crosslinking can be pre-determined and controlled by introducing a stoichiometric amount of a first amine and a second amine in a predetermined ratio to control the amount of crosslinking which will occur. Alternatives to TMA include, but are not limited to other aliphatic monoamines (linear or cyclic), aromatic amines, or imidazole derivatives

For the above, a solvent is required. In the preferred embodiment the solvent is methanol (MeOH), other solvents may be used, such as but not necessarily limited to water, ethylene glycol or ethanol. Alternatively, less polar solvents may be used, such as but not necessarily limited to ethyl acetate or acetonitrile, or even non-polar solvents may be used, such as but not limited to hydrocarbons or toluene, provided these solvents don't dissolve the polymeric films.

Whilst it is envisaged that the functionalisation degree may be anywhere between 1% and 50%, preferably it is in the range of 3% and 35%. More preferably still the functionalisation degree is in the range of 7% and 15%.

In the preferred embodiment, the cations are quaternary ammonium groups. Alternatively, any cation may be used which would facilitate the movement of an anion such as, but not limited to OH⁻. Such compounds include, but not necessarily limited to nitrogen, phosphorous, sulphur, or a metal based cation. It is envisaged that any combination of cations present may be used.

Whilst it is envisaged that crosslinking will occur at the polymeric backbone, there can also be crosslinking involving the cationic groups, as discussed above.

Hydrogen crossover must also be considered and this can be controlled in a variety of ways. In one embodiment fillers may be used, preferably the filler is Al₂O₃, alternatively Cu phthalocyanine or Vulcan may be used. The fillers may be used alone, or in combination. The filler or fillers may be organic, inorganic or a combination thereof. Another means for controlling hydrogen crossover is by utilising Lewis Acids for crosslinking. Such acids include but are not necessarily limited to AlCl₃ and SnCl₄. With SnCl₄ preferred over other acids. These Lewis acids can enhance crosslinking during casting procedure and/or with water from the air they may be transformed into fillers such as Al₂O₃ or SnO₂. When using Lewis acids, some functionalisation is sacrificed for crosslinking.

Crosslinking is a useful means to control mechanical properties and or hydrogen crossover. Other ways of promoting crosslinking are by exploiting functional groups in TPEs, for example, the double bond in butadiene in SBS.

It should be noted that crosslinking may also occur due to UV light, vulcanisation, Lewis acids, the use of a monomer such as divinylbenzene, or a variety of other reasons, which may be controlled as discussed herein.

Furthermore, the addition of a nano-clay, or similar compound, such as but not necessarily limited to Montmorillonite may be introduced to address hydrogen crossover. Montmorillonite is beneficial as it forms a lamellar structure over the membrane reducing hydrogen crossover. Normally, it is envisaged that the montmorillonite or equivalent will be treated, such as by exfoliation with an appropriate cationic group.

SEBS in the region of 35wt% to 65wt% styrene exhibits lamellar properties. The orientation of this may vary, however, in the preferred embodiment the SEBS is lamellar in substantially one plane. The laminations may be substantially parallel, or perpendicular to the plane of the membrane.

The conditions in which the membrane is cast also impact the properties of said membrane. In the preferred embodiment, the membrane is cast in a substantially anhydrous and clean environment. Additionally, in order to mitigate the risk of contamination or undesired reactions occurring, each stage may be done in an inert atmosphere. Further still, it is preferable to conduct the casting in the dark, or at least a light restricted environment.

A solvent is not necessarily required. It is envisaged that solvent free casting of the film can be achieved by extrusion. In such instances the polymer would have to be heated to an appropriate temperature for the properties of said polymer to allow for extrusion.

An AEM, made in accordance to the present invention, may be used in a variety of applications, including but not limited to electrolysers, fuel cells, electrochemical compressors, and electroosmotic devices. The membrane would constitute part of the membrane electrode assembly (MEA). Preferably, such an MEA comprises at least an AEM in accordance with the present invention and one or more catalysts at the anode and or cathode. More preferably still, the catalysts used include no platinum group metals (PGM).

As used herein, the term halomethylating is intended to include variants such as, but not limited to, chloromethylation, bromomethylation, iodomethylation. Reference to one of the examples of halomethylation is not intended to exclude other embodiments. For example, the preferred embodiment uses chloromethylation, but reference thereto does not necessarily preclude other forms of halomethylation

Whilst it is envisaged that a TPE may be any TPE comprising an aromatic ring, in the preferred embodiment, it is envisaged said TPE comprises styrene. The styrene being in the range of 30wt% to 70wt%. Further still, it is envisaged that the TPE comprising styrene is SEBS.

For the purification of SEBS, with the desired ratio of styrene, or any suitable TPE, the polymer is dissolved in a solvent such as, but not limited to, chloroform. The solution of SEBS in chloroform is optionally filtered and then slowly poured into an alcohol, such as but not necessarily limited to methanol. Other non-polar solvents may be used, such as but not necessarily limited to hydrocarbons including toluene or others such as ethyl acetate. The resulting mixture is then filtered, preferably under vacuum or other means such as centrifugation. This step may be repeated to obtain a radical inhibitor, or other additives, free polymer.

Whilst the purification could be done without additional restrictions, it is preferred that reactions are done in a sealed vessel, such as a flask with an inert stopper, and in the absence of light, and excess water, or oxygen. Covering the reaction vessel with an opaque material is beneficial and preferred in this regard.

The purified SEBS must then be halomethylated. In the preferred embodiment, this entails dissolving the purified SEBS in chloroform. Trioxane, trimethylsilyl chloride and SnCl₄, or their alternatives, are then added and a condenser attached to the reaction vessel. The solution may be heated by any means, but it is preferred that an oil bath is used. The mixture is then heated from 0°C to 50°C for an extended period of time, e.g. over 24 hours, preferably 72hours to 120 hours. In the preferred embodiment the reaction is left to run for 96 hours. In fact, the reaction is envisaged to run between 3 hours and 6 days, this is dependent upon the TPE used.

The reaction may be stopped by adding a mixture of water and methanol, normally in a 50:50 ratio by volume, or any other mixture which would hydrolyse the unreacted reagents. Alternatively, potassium carbonate may be used, or other compound or mixture able to hydrolyse unreacted reagents.

Means for separating the chloroform phase from the reaction vessel, such as a separating funnel, are used to separate the chloroform phase from the others. The chloroform phase is then to be poured into methanol, preferably slowly, at which point a precipitate will form, this mixture is filtered again.

The precipitated filtered polymer may be purified further by dissolving it in chloroform again, with the resulting solution being poured into methanol. The polymer may then be filtered by a variety of means, but vacuum filtration is preferred. Such filtration may be employed on the prior step.

Casting of the membrane is next. The dried purified chloromethylated SEBS from previous steps is dissolved in chloroform, or other solvent, and is then optionally filtered. The membrane is then cast in a preferably clean environment, with means provided to control the evaporation of the solvent, such as a bell jar, or other cover. The cast membrane, once dry, can be removed for further processing. Alternative methods of casting include solvent free casting by utilising elevated temperatures to allow for the extrusion of the polymer.

The purified and halomethylated SEBS, now cast, must then be aminated. Whilst amination may be done by using a ratio of two or more amines selected from monoamine, diamine or polyamine, the preferred embodiment is a combination of TMHDA:TMA. Alternatively, N-methylimidazole, N-methylpiperidine, N-methylpyrrolidine or DABCO may be used. It is envisaged that both linear and cyclic variants of the amines may be used. Whilst this may be done by soaking the purified chloromethylated SEBS in TMA at above room temperature for 16-72 hours, there are preferred alternatives.

As discussed above, most preferable is by using a mixture of TMHDA:TMA in a ratio of substantially 20:80. Alternative options are outlined above, and may be used in the method as described herein. This blend of solutions is then mixed with a solvent such as but not limited to methanol, ethanol, glycerine or ethylene glycol. The purified, chloromethylated SEBS is placed in the TMHDA:TMA mixture, or equivalent, and is preferably heated to above room temperature, between 40°C-80°C, more preferably 50°C-70°C and most preferably still at substantially 60°C. After the membrane should be stored, ready for use, with any rinsing/washing and drying done before storage. Storage should be done in a low temperature, dark and low to no humidity environment.

The preferred ratio given above is 20:80. In fact, it is envisaged that the ratio of a first amine to second amine, such as but not limited to, TMHDA:TMA may be in the range of 5:95 and 60:40. Examples including but not limited to 10:90, 20:80, 30:70, 40:60 and 50:50. The ratio may be amended to meet the desired characteristics for the membrane.

As above, by selecting a diamine or polyamine with a carbon chain greater than or equal to 3 by adjusting the ratios with TMA, or other monoamines, to predetermine the degree of functionalisation. Indeed, by using a ratio of two (or more) amines for the amination process, the inventors have discovered that it is possible to simultaneously cross-link and functionalise the membrane, which is clearly highly advantageous.

Methods of the present invention aminate the cast membrane as opposed to during other stages as the efficacy has been found to be higher with the membrane, rather than particles.

As discussed above, there are a variety of optional steps to vary certain properties of the membrane, such as hydrogen cross over, conductivity and mechanical strength. These are outlined below.

Hydrogen crossover is an issue for membranes used in electrochemical devices, especially when operated at high pressure. Whilst crosslinking occurs during the TMHDA:TMA amination stage, additional methods may be employed to reduce hydrogen crossover of the final membrane. One such example includes the utilisation of fillers. Preferably the filler is Al₂O₃, alternatively Cu phthalocyanine or Vulcan may be used. The fillers may be used alone, or in combination. The filler or fillers may be organic, inorganic or a combination thereof. Crosslinking using a ratio of amines is discussed in further detail above.

Another means for reducing hydrogen crossover is by additional crosslinking, with Lewis Acids such as, but are not necessarily limited to AlCl₃ and SnCl₄, with SnCl₄ performing better than other acids.

It has been found that the conditions in which the membrane is synthesised directly influence the final characteristics. It is preferred that the steps are conducted in a controlled environment, preferably dark, dry (i.e. Substantially no or very low humidity) and clean, i.e. free of dust and potential contaminants.

It has been found that the styrene content not only affects the morphology but also the properties of the membrane, such as water uptake, hydrogen crossover and mechanical properties. In the desired range the material displays plastomeric properties, combining both the rubber like properties of an elastomer and the ability to be processed in a way similar to plastics.

### Specific Example

Following are the steps, with measurements, of a specific example for synthesising an AEM in accordance with the present invention.

### Purification of SEBS

1. 10g of SEBS, 30wt%-70wt% styrene, is dissolved in 200ml chloroform at room temperature.
2. Pouring the dissolved SEBS from step 1, slowly, into 300ml Methanol.
3. Filtering to obtain the precipitate. - steps 1 to 3 may be repeated to obtain radical inhibitor free purified SEBS.
4. Dry the precipitate above room temperature for a sufficient period of time to ensure the solvent is removed.
5. If not being used right away, the dried purified SEBS should be stored adequately.

### Chloromethylation

6. Approximately 10g of purified SEBS is dissolved in 500ml chloroform in a flask at room temperature.
7. Add to the mixture 4g trioxane 30ml trimethylsilyl chloride and 3ml SnCl₄, affix a water cooled reflux condenser, and place the flask in an oil bath for heating to 50°C for 48 hours.
8. Stop the reaction by adding 300ml of 50:50 (vol) water and methanol from the top of the condenser.
9. The multiphase solution can be separated using a separation funnel - the chloroform phase being added, slowly, into 500ml methanol to precipitate the chloromethylated SEBS. Filter the precipitate, and dry it.
10. Purification of the precipitated chloromethylated SEBS by dissolving it in minimal chloroform required at room temperature, and slowly adding to methanol to precipitate.
11. Filter to obtain the purified chloromethylated SEBS.
12. Dry the purified chloromethylated SEBS precipitate above room temperature for a sufficient period of time to ensure the solvent is removed.
13. If not being used right away, the dried purified chloromethylated SEBS should be stored appropriately.

### Casting

14. The dried, purified, chloromethylated SEBS is dissolved in chloroform, or other organic solvent, and filtered to remove particles.
15. Casting of the membrane is done in a clean environment, into a petri dish with means to ensure slow evaporation of the solvent, such as a class bell jar with small opening.
16. Detaching the cast membrane from the petri dish after the solvent has evaporated, carefully to minimise the risk of contamination.

### Amination

17. The cast membrane is soaked in a solution of TMHDA:TMA (in a ratio of 10:90) for 48 -72hours at 60°C with a reflux condenser. The amination reaction occurs in heterogeneous phases.
18. Extract the membrane from the amination bath, and rinse.
19. Preparation of the membrane for storage, or use.

Certain stages, including stage 6, may preferably be conducted in an inert atmosphere, such as with nitrogen blanket. Additionally, reactions may be done in vessels adapted to exclude light. In stage 13, the optional filler can be added, or diamine for additional crosslinking. Normally only one is done, and not both.

A solvent is not necessarily required at all stages. It is envisaged that solvent free casting of the film can be achieved by extrusion. In such instances the polymer would have to be heated to an appropriate temperature for the properties of said polymer to allow for extrusion. Other means of casting the membrane, with or without a solvent, include utilising elevated pressures between two smooth surfaces to achieve a more homogenous, smooth membrane. Alternatives include casting onto a non-stick surface, such as Teflon.

In order to cast a membrane with a predetermined thickness, the method is as follows: weigh a pre-determined amount of polymer to be dissolved in an excess of solvent and cast in a pre-determined area such that when the solvent evaporates the cast membrane is of the desired thickness. Alternatively, the wet thickness may be used in place of the area in calculating the desired dry thickness, in this embodiment the quantity of solvent to be used is pre-determined such that it is not in excess. In this second embodiment it is possible to make the process continuous by employing known roll to roll techniques such as by but not limited to blade coating, slot die, spraying and more.

According to methods of the present invention, crosslinking of the membrane occurs during amination of said membrane.

It should also be noted that the membrane is normally to be used as part of an MEA. As such the membrane can be prepared in a desired shape, or cut to size.

To help understanding of the invention, a specific embodiment thereof will now be described by way of example and with reference to the accompanying drawings, in which:
Figure 1 depicts the phase volume ratio of styrene/butadiene block copolymers, and its morphology;
Figure 2 a-c shows SEM micrographs of membranes cast in accordance with the present invention;
Figure 3 depicts the crosslinking resultant from the utilisation of Lewis Acids; and
Figure 4 a-d shows graphs demonstrating the properties of a membrane manufactured in accordance with the present invention.

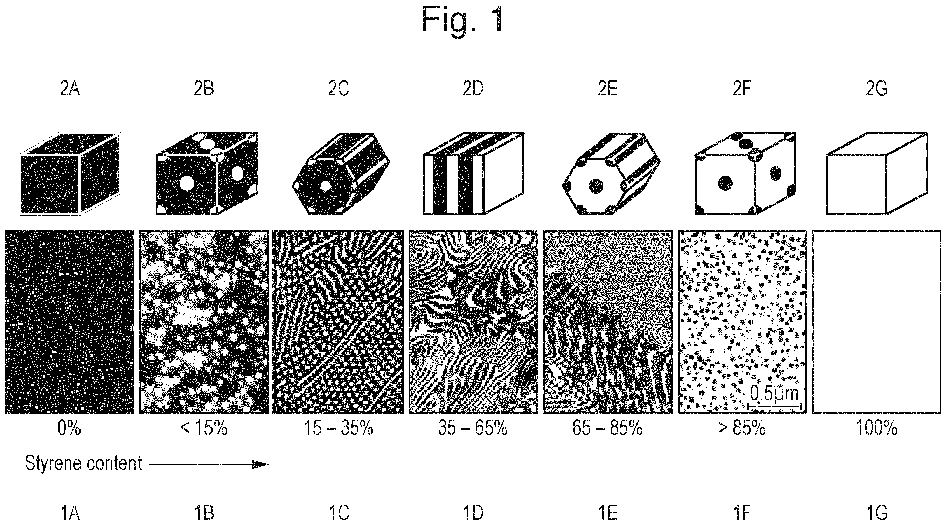

Referring to Figure 1, there are a plurality of images, both micrography and diagrams, showing the structure of commercially available styrene butadiene products. From 1A to 1G there is an increasing wt% of styrene and a decreasing amount of butadiene. Styrene is depicted as black, and butadiene as white.

The morphology seen in 1A, depicted in another format in 2A, shows no styrene present. In 1B and 2B, with less than 15wt% styrene shows microchannels in the butadiene. Between 15wt% and 35wt% styrene content, 1C, 2C the number of channels is increased such that it may be considered bicontinuous.

Unexpectedly, in the range of 35wt% - 65wt% styrene, 1D and 2D, the structure changes from microchannels 3 of styrene to a lamellar structure with alternating layers of styrene 4 and butadiene 5. The lamellar structure allows for improved properties such as mechanical strength, conductivity, reduced hydrogen crossover, etc.

Once the amount of styrene increases to 65wt% - 85wt%, 1E and 2E, the morphology substantially mirrors 1C and 2C with channels of butadiene present in the styrene. Above 85wt% 1F, 2F, the morphology substantially mirrors 1B 2B, with butadiene channels being present in a majority styrene structure.

The properties of the compounds depicted in Figure 1 vary dependent upon composition. With no styrene, 1A, the properties are rubber. Increasing up to 35wt% styrene, it exhibits thermoplastic elastomeric properties. In the preferred range, 1D, it is a plastomer, exhibiting both elastomeric and plastic properties. Above 65% the compound becomes more brittle.

Key stages of a method of manufacturing an anion exchange membrane in accordance with a specific and exemplary embodiment of the present invention will now be outlined. Whilst specific compounds are named, the alternatives outlined above may be used. The steps follow, with headings added depicting each section.

### Purification of SEBS

**a)** 10g of SEBS, 30wt%-70wt% styrene, is dissolved in 200ml chloroform at room temperature.
**b)** Pouring the dissolved SEBS from step 1, slowly, into 300ml Methanol.
**c)** Filtering to obtain the precipitate. - steps a to c may be repeated to obtain radical inhibitor free purified SEBS.
**d)** Dry the precipitate above room temperature for a sufficient period of time to ensure the solvent is removed.
**e)** If not being used right away, the dried purified SEBS should be stored adequately.

### Chloromethylation

**f)** Approximately 10g of purified SEBS is dissolved in 500ml chloroform in a flask at room temperature.
**g)** Add to the mixture 4g trioxane 30ml trimethylsilyl chloride and 3ml SnCl₄, affix a water cooled reflux condenser, and place the flask in an oil bath for heating to 50°C for 48 hours.
**h)** Stop the reaction by adding 300ml of 50:50 (vol) water and methanol from the top of the condenser.
**i)** The multiphase solution can be separated using a separation funnel - the chloroform phase being added, slowly, into 500ml methanol to precipitate the chloromethylated SEBS. Filter the precipitate, and dry it.
**j)** Purification of the precipitated chloromethylated SEBS by dissolving it in minimal chloroform required at room temperature, and slowly adding to methanol to precipitate.
**k)** Filter to obtain the purified chloromethylated SEBS.
**l)** Dry the purified chloromethylated SEBS precipitate above room temperature for a sufficient period of time to ensure the solvent is removed.
**m)** If not being used right away, the dried purified chloromethylated SEBS should be stored appropriately.

### Casting

**n)** The dried, purified, chloromethylated SEBS is dissolved in chloroform, or other organic solvent, and filtered to remove particles.
**o)** Casting of the membrane is done in a clean environment, into a petri dish with means to ensure slow evaporation of the solvent, such as a class bell jar with small opening.
**p)** Detaching the cast membrane from the petri dish after the solvent has evaporated, carefully to minimise the risk of contamination.

### Amination

**q)** The cast membrane is soaked in a solution of TMHDA:TMA (in a ratio of 10:90) for 48 -72 hours at 60°C with a reflux condenser. The amination reaction occurs in heterogeneous phases.
**r)** Extract the membrane from the amination bath, and rinse.
**s)** Preparation of the membrane for storage, or use.

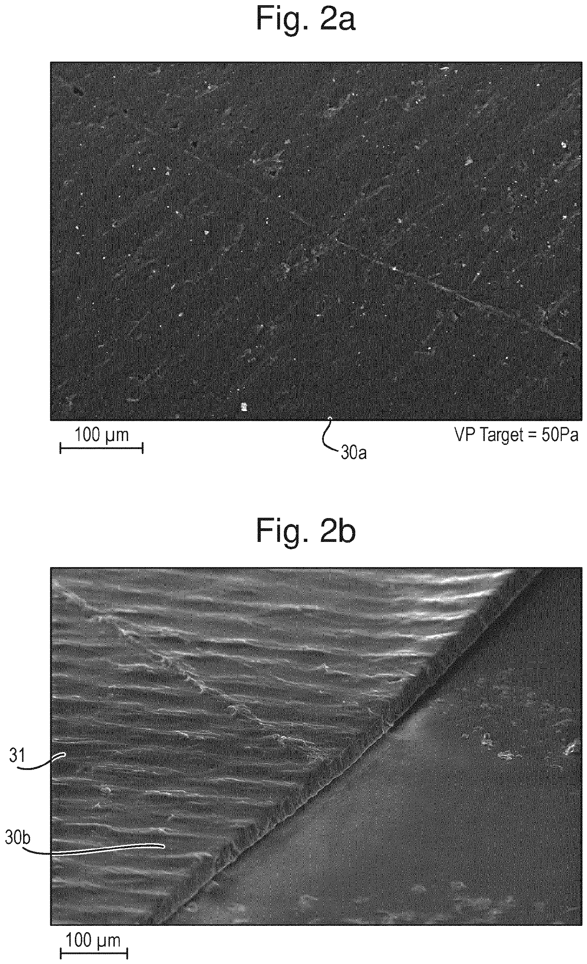

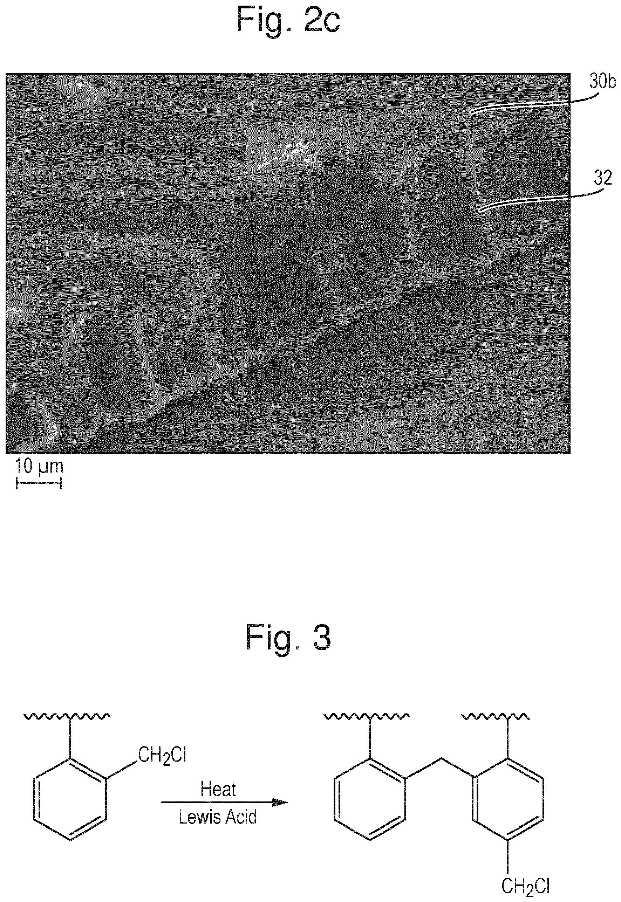

Figure 2a shows an SEM micrograph of a membrane cast in accordance with the present invention. The membrane 30a can be seen to be substantially smooth with no major defects. This membrane sample differs to the sample shown in Figures 2b and 2c, wherein the membrane was cast onto an unpolished surface.

Figure 2b depicts a second membrane, 30b, with Figure 2c being a close up of the cross section of membrane 30b. Ridges 31 can be seen, and are attributable to how smooth the surface upon which the membrane was cast. In Figure 2c, the cross section of membrane 30b is more easily viewed. It can be seen that the membrane has lamellar planes 32, the planes being sustainably perpendicular to the orientation of the membrane.

Figure 3 depicts the reaction occurring during the Lewis acid crosslinking. Either AlCl₃, SnCl₄ or another Lewis acid may be used. The crosslinking process occurs on the styrene blocks of the polymer and the halomethylene group react in an alkylation reaction (Friedel-Craft), with the Lewis acid as a catalyst, and a methylene bridge between the two aromatic rings of the polymer.

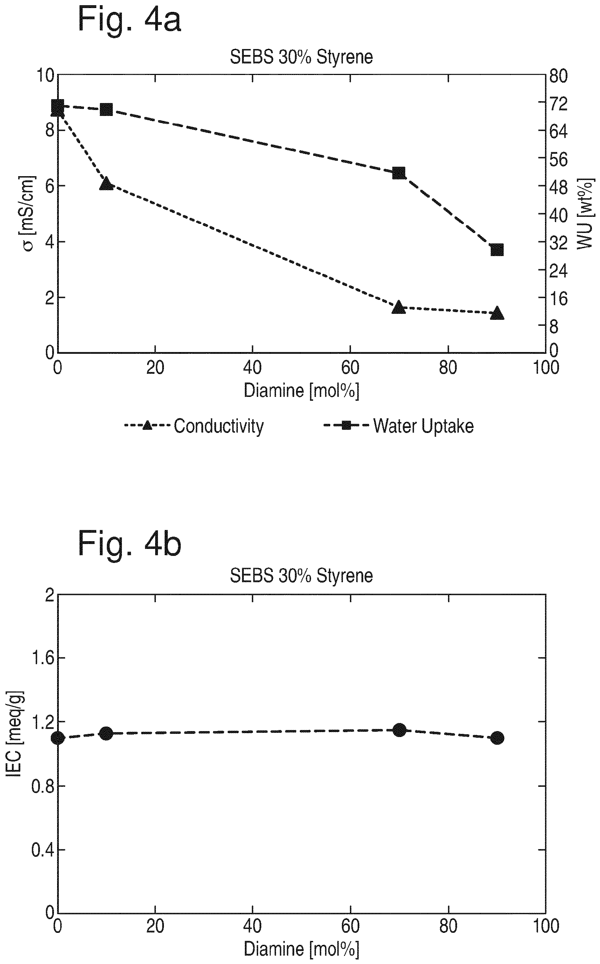

Figures 4a and b depict graphs demonstrating the properties of a membrane made in accordance with the present invention comprising SEBS with 30% styrene using a ratio of monoamine and diamine.

In Figure 4a the conductivity and water uptake are shown as the ratio of diamine mol% increases. The conductivity falls significantly between 0% and 10% diamine from 9mS/cm to 6.5mS/cm. As the diamine ratio increases to 70% there is a sustained decrease to approximately 1.7mS/cm. Between 70% and 90% diamine, the conductivity remains substantially, falling to 1.5 mS/cm.

The water uptake sees a similar pattern inversed for the 30% SEBS sample. Starting at approximately 68% uptake (wt) at 0% amine, there is little difference when the ratio of diamine increases to 10%. Between 10% to 70% diamine the water uptake falls to 40%. The final slope of the graph is most significant, with approximately 30% water uptake when 90% diamine is used.

Figure 4b shows the ion exchange capacity (IEC) of the same membrane. Interestingly, the IEC remains substantially constant between 1.1 and 1.2 mEq/g, independent of the ratio of diamine.

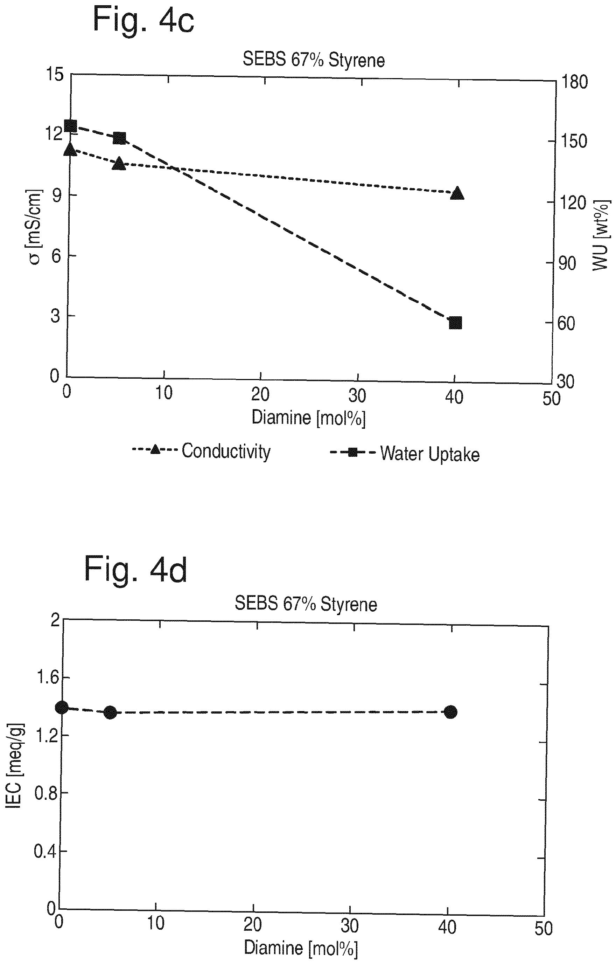

Figures 4c and 4d show the same graphs as 4a and 4b respectively, but for a membrane made in accordance with the present invention using SEBS with a styrene content of 67%. In Figure 4c it is shown that the conductivity falls from 11mS/cm to 10.5 mS/cm as the diamine increases from 0% to 5%. The slope remains gentle decreasing to approximately 10 mS/cm at 40% diamine. This differs to the water uptake, which is far higher in this embodiment falling from 157% to approximately 148% as the diamine % increased from 0% to 5%. The water uptake drops drastically as the diamine % is increased to 40%, falling to 60% water uptake.

Figure 4d shows the IEC of the membrane comprising 67% SEBS. As the diamine % increases from 0% to 40%, the IEC remains substantially the same around 1.5 mEq/g.

The IEC is noted as being slightly higher than the embodiment with 30% SEBS. However, the IEC remains substantially constant for both embodiments independent of the ratio used.

The difference is more pronounced when comparing the conductivity and water uptake. The drop in conductivity is greater in the sample with 30% SEBS, falling to under 4mS/cm at a comparable 40% diamine, whereas the sample with 67% SEBS remains at above 10 mS/cm. Conversely, the water uptake is generally much higher in the sample with more styrene in the SEBS.

Different applications for a membrane require different properties to be optimised for, these include conductivity, cross-over and mechanical strength, amongst others. Water uptake is linked to mechanical strength, and this parameter varied greatest.

The invention is not intended to be restricted to the details of the above described embodiments, and it will be apparent to a person skilled in the art, from the foregoing description, that modifications and variations can be made to the described embodiments without departing from the scope of the invention as defined by the appended claims. For instance, different parameters may be altered to improve different characteristics, such as conductivity, cross-over and mechanical strength.

The above invention is not intended to be limited to a specific type of electrochemical device. In fact, the present invention may be used with any device or process which may require an AEM.

The invention is not intended to be limited to monoamine, diamines and triamines, similar results may be achieved by using other polyamines.

Halomethylation to achieve a halomethyl group on the aromatic ring may be achieved by alternate means, such as, but not limited to, polyphenylene oxide. Such routes are not intended to be excluded by the present invention.

Amination is used to refer to the stage of introducing cationic groups. Amination as a term is not intended to exclude other suitable compounds.

Whilst polymer is used extensively in this document, its use is intended to include oligomers.

Various stages require heating, the present invention is not intended to be limited to the use of an oil bath, as any suitable heating means may be used.

As used herein, AEM is intended to refer to anion exchange membranes and an AEM electrolyser being an electrolyser utilising an AEM. Conversely, PEM refers to proton exchange membrane, and a PEM electrolyser is an electrolyser with a PEM.

## Claims

1. A method of manufacturing an anion
exchange membrane, the method comprising:
• purifying a thermoplastic elastomer (TPE) comprising an aromatic ring,
• halomethylating the purified TPE, and
• casting of the membrane,
• aminating the purified and halomethylated TPE with at least a first amine and a second amine, the amines being any two or more of:
• a monoamine,
• a diamine, and
• a polyamine, and
• preparing the resultant membrane for use or storage,
wherein the amination step is carried out on the cast membrane, and crosslinking of the membrane occurs during the amination step.

2. A method according to claim 1, wherein the TPE is a polymeric backbone, and the method includes cross-linking of a polymeric backbone to one or more other polymeric backbones and/or a side chain of a said polymeric backbone.

3. A method according to claim 1 or claim 2, wherein the first and second amines are TMHDA and TMA respectively, or wherein the first and second amines are any two of:
• N-methylimidazole,
• N-methylpiperidine,
• N-Methylpyrrolidine,
• Triethanolamine
• DABCO,
• TMEDA,
• TMHDA, and
• TMA.

4. A method according to any of the preceding claims, wherein halomethylation involves:
• dissolving the purified TPE,
• mixing the dissolved TPE with any of trioxane, trimethylsilyl chloride and SnCl₄,
• placing the reactants in a reflux condenser, and
• heating from 0°C to 50°C for an extended period between 3 hours and 6 days.

5. A method according to any of the preceding claims, wherein:
• the membrane is cast with means adapted to control the rate of evaporation of the solvent; and/or
• the membrane is cast by heating and extruding then purified chloromethylated polymer or by roll to roll.

6. A method according to any of the preceding claims, wherein one or more of the amines selected have a carbon chain of three or more.

7. A method according to claim 2, wherein a ratio of said first amine to said second amine is predetermined to determine cross-linking.

8. A method according to any of the preceding claims, wherein any one of, or combination of, the following fillers are present: Al₂O₃, SnO₂, Cu phthalocyanine, Vulcan, and montmorillonite.

9. A method according to any of the preceding claims, wherein a, or each of two or more steps, is undertaken in an environment controlled for any of the following:
• light,
• cleanliness,
• humidity, and
• inert atmosphere.

## Patentansprüche

1. Verfahren zur Herstellung einer Anionenaustauschmembran, wobei das Verfahren umfasst:
• Aufreinigen eines thermoplastischen Elastomers (TPE), umfassend einen aromatischen Ring,
• Halomethylieren des aufgereinigten TPE und
• Gießen der Membran,
• Aminieren des aufgereinigten und halomethylierten TPE mit mindestens einem ersten Amin und einem zweiten Amin, wobei die Amine beliebige zwei oder mehr der folgenden sind:
• ein Monoamin,
• ein Diamin und
• ein Polyamin, und
• Vorbereiten der Membran zur Verwendung oder Lagerung,
wobei der Aminierungsschritt an der gegossenen Membran ausgeführt wird und eine Vernetzung der Membran während des Aminierungsschritts stattfindet.

2. Verfahren nach Anspruch 1, wobei das TPE eine Polymerhauptkette ist und das Verfahren eine Vernetzung einer Polymerhauptkette mit einer oder mehreren anderen Polymerhauptketten und/oder einer Seitenkette einer der besagten Polymerhauptketten beinhaltet.

3. Verfahren nach Anspruch 1 oder Anspruch 2, wobei das erste und das zweite Amin TMHDA bzw. TMA sind oder wobei das erste und das zweite Amin beliebige zwei der folgenden sind:
• N-Methylimidazol,
• N-Methylpiperidin,
• N-Methylpyrrolidin,
• Triethanolamin,
• DABCO,
• TMEDA,
• TMHDA und
• TMA.

4. Verfahren nach einem der vorhergehenden Ansprüche, wobei die Halomethylierung beinhaltet:
• Lösen des aufgereinigten TPE,
• Mischen des gelösten TPE mit einem beliebigen von Trioxan, Trimethylsilylchlorid und SnCl₄,
• Geben der Reaktanten in einen Rückflusskühler und
• Erhitzen von 0 °C bis 50 °C für einen längeren Zeitraum zwischen 3 Stunden und 6 Tagen.

5. Verfahren nach einem der vorhergehenden Ansprüche, wobei:
• die Membran mit einem Mittel gegossen wird, das dazu eingerichtet ist, die Verdunstungsrate des Lösungsmittels zu steuern; und/oder
• die Membran durch Erhitzen und dann Extrudieren von aufgereinigtem chlormethyliertem Polymer oder durch Rolle-zu-Rolle gegossen wird.

6. Verfahren nach einem der vorhergehenden Ansprüche, wobei ein oder mehrere der ausgewählten Amine eine Kohlenstoffkette von drei oder mehr aufweisen.

7. Verfahren nach Anspruch 2, wobei ein Verhältnis des besagten ersten Amins zu dem besagten zweiten Amin vorbestimmt ist, um eine Vernetzung zu bestimmen.

8. Verfahren nach einem der vorhergehenden Ansprüche, wobei ein beliebiger oder eine Kombination der folgenden Füllstoffe vorliegt: Al₂O₃, SnO₂, Cu-Phthalocyanin, Vulcan und Montmorillonit.

9. Verfahren nach einem der vorhergehenden Ansprüche, wobei einer oder jeder von zwei oder mehr Schritten in einer Umgebung vorgenommen wird, in der beliebige der folgenden kontrolliert werden:
• Licht,
• Reinheit,
• Luftfeuchtigkeit und
• inerte Atmosphäre.

## Revendications

1. Procédé de fabrication d'une membrane échangeuse d'anions, le procédé comprenant :
• la purification d'un élastomère thermoplastique (TPE) comprenant un cycle aromatique,
• une halométhylation du TPE purifié, et
• une coulée de la membrane,
• une amination du TPE purifié et halométhylé avec au moins une première amine et une deuxième amine, les amines étant deux ou plusieurs quelconques de :
• une monoamine,
• une diamine, et
• une polyamine, et
• une préparation de la membrane ainsi obtenue en vue de son utilisation ou de son stockage,
dans lequel l'étape d'amination est réalisée sur la membrane coulée, et une réticulation de la membrane a lieu durant l'étape d'amination.

2. Procédé selon la revendication 1, dans lequel le TPE est un squelette polymère, et le procédé comprend la liaison par réticulation d'un squelette polymère à un ou plusieurs autres squelettes polymères et/ou à une chaîne latérale d'undit squelette polymère.

3. Procédé selon la revendication 1 ou la revendication 2, dans lequel les première et deuxième amines sont respectivement TMHDA et TMA, ou dans lequel les première et deuxième amines sont deux ou plusieurs quelconques de :
• N-méthylimidazole,
• N-méthylpipéridine,
• N-méthylpyrrolidine,
• triéthanolamine
• DABCO,
• TMEDA,
• TMHDA, et
• TMA.

4. Procédé selon l'une quelconque des revendications précédentes, dans lequel l'halométhylation comprend :
• une dissolution du TPE purifié,
• un mélange du TPE dissous avec n'importe lequel du trioxane, du chlorure de triméthylsilyle et du SnCl₄,
• une introduction des réactifs dans un condenseur à reflux, et
• un chauffage de 0 °C à 50 °C durant une période prolongée de 3 heures à 6 jours.

5. Procédé selon l'une quelconque des revendications précédentes, dans lequel :
• la membrane est coulée par un moyen conçu pour réguler la vitesse d'évaporation du solvant ; et/ou
• la membrane est coulée par chauffage et extrusion du polymère chlorométhylé purifié ou par un procédé roll-to-roll.

6. Procédé selon l'une quelconque des revendications précédentes, dans lequel une ou plusieurs des amines sélectionnées comportent une chaîne carbonée de trois atomes ou plus.

7. Procédé selon la revendication 2, dans lequel un rapport de ladite première amine à ladite deuxième amine est prédéterminé pour déterminer la réticulation.

8. Procédé selon l'une quelconque des revendications précédentes, dans lequel n'importe laquelle des charges suivantes, ou une combinaison de celles-ci, est présente : Al₂O₃, SnO₂, phtalocyanine de Cu, Vulcan, et montmorillonite.

9. Procédé selon l'une quelconque des revendications précédentes, dans lequel une, ou chacune de deux ou plusieurs étapes, est réalisée dans un environnement où n'importe lesquelles des caractéristiques suivantes sont régulées :
• lumière,
• propreté,
• humidité, et
• atmosphère inerte.
